# EUROPÄISCHE PATENTSCHRIFT

(11) **EP 2 309 067 B1**
(45) Veröffentlichungstag und Bekanntmachung des Hinweises auf die Patenterteilung: **01.03.2017**
(21) Anmeldenummer: 10013256.2
(22) Anmeldetag: 04.10.2010
(51) Int. Cl.: F24J 2/04, F24J 2/34, E04B 1/74, E04B 1/76

(54) **Plattenförmiges Verkleidungselement für eine Mauer und Mauerverkleidung**
Plate-shaped cladding element for a wall and wall cladding
Elément de revêtement en forme de plaque pour un mur et revêtement de mur

(30) Priorität: 08.10.2009 AT 15892009
(43) Veröffentlichungstag der Anmeldung: 13.04.2011
(73) Patentinhaber: Kleebinder, Karl, 3385 Markersdorf (AT)
(72) Erfinder: Kleebinder, Karl, 3385 Markersdorf (AT)

(56) Entgegenhaltungen:
- AT-A4- 505 298
- CH-A5- 647 290
- DE-U1- 29 612 755

## Beschreibung

Die Erfindung betrifft ein Plattenförmiges Verkleidungselement für eine Mauer eines Gebäudes, wobei in dem Verkleidungselement ein oder mehrere - in einem an der Mauer montierten Zustand des Verkleidungselementes - von oben nach unten verlaufende Kanäle zur Durchströmung eines Wärme- und/oder Kälte-Trägermedium, vorzugsweise für Luft, vorgesehen sind, wobei der zumindest eine Kanal- in einem an der Mauer montierten Zustand des Verkleidungselementes - an einer Begrenzungsfläche, welche der Mauer zugewandt ist, nach Außen hin, der Mauer zugewandt offen, ausgebildet ist, wobei der eine oder die mehreren Kanäle derart in Bezug auf eine von oben nach unten verlaufende Symmetriegerade, welche Symmetriegerade die der Mauer zugewandte Begrenzungsfläche halbiert, angeordnet ist/sind, dass in einer Hälfte der Begrenzungsfläche eine größere Fläche von dem zumindest einen Kanal eingenommen ist als in der anderen Hälfte.

Weiters betrifft die Erfindung eine Mauerverkleidung für eine Außenmauer eines Gebäudes, bestehend aus einem oberen, das Gebäude zumindest teilweise umlaufenden Hauptkanal sowie einem unteren, das Gebäude ebenfalls teilweise umlaufenden Hauptkanal, und wobei die beiden Hauptkanäle mittels in Verkleidungsplatten angeordneten, von oben nach unten verlaufenden Kanälen verbunden sind.

Derzeit ist es üblich, Hauser mit einer Wärmedämmung zu versehen. Dazu wird eine Dämmung zumeist in Form von Dämmplatten an der Außenseite der Außenwände des Gebäudes aufgebracht. Diese Dämmung reduziert bei dem Gebäude den Wärmeverlust durch die Außenwand.

Der Nachteil einer solchen Dämmung ist, dass die auf das Mauerwerk einfallende Sonnenenergie nicht zur Erwärmung des Gebäudes genützt werden kann, da die Dämmung nicht nur vor Wärmeverlusten aus dem Gebäude schützt, sondern auch verhindert, dass Wärme in das Gebäude hineingelangt.

Um die einfallenden Sonnenenergie nutzen zu können, ist es bekannt, in der Außenmauer eines Gebäudes Luftkanäle unterzubringen, in welchen z.B. mittels eines Sonnenkollektors erwärmte Luft in der Mauern strömen kann und dabei Wärme an das Mauerwerk und in Folge an die Innenräume des Gebäudes abgibt.

Um eine Erwärmung eines Gebäudes mittels an der Gebäudeaußenseite vorbeiströmender, warmer Luft zu ermöglichen, sind eingangs genannte Verkleidungselemente bekannt, bei welchen ein oder mehrere Kanäle zur Durchströmung eines Wärme- und/oder Kälte-Trägermedium, vorzugsweise für Luft, vorgesehen sind. Die warme Luft kann dann die Wärme beim Durchströmen der Kanäle an die Mauer abgeben.

Ein solches Verkleidungselement eignet sich für Neubauten aber auch für ein nachträgliches Sanieren von bereits bestehenden Gebäuden.

Besonders gut kann die Wärme abgegeben werden, wenn die Kanäle an einer im an der Mauer angebrachten Zustand der Mauer zugewandten Begrenzungsfläche nach Außen hin, der Mauer zugewandt offen ausgebildet sind.

Aus der WO2008/128262A1 sind eingangs erwähnte Verkleidungselemente bekannt, bei welchen Kanäle unter anderem von oben nach unten verlaufen. Damit ein Überströmen von Luft zwischen den Kanälen übereinander liegender Verkleidungselemente möglich ist, münden die Kanäle eines Verkleidungselementes jeweils in einen an der oberen und der unteren Begrenzungsfläche des Verkleidungselementes verlaufenden Kanal.

Die in diesem genannten Dokument gezeigten Verkleidungselemente ermöglichen eine gute und gleichmäßige Wärmeübertragung (oder gegebenenfalls Kühlung) über die gesamte Fläche der der Mauer zugewandten Begrenzungsfläche. Nachteilig an diesen Platten ist allerdings die relativ aufwändige Herstellung und die Notwendigkeit von Kanälen in der oberen und unteren Begrenzungsfläche, da andernfalls bei einer ungenauen Montage möglicherweise die Kanäle zweier übereinander angeordneter Platten nicht ineinander übergehen und entsprechend die Luft zwischen den Kanälen der beiden Platten nicht überströmen kann.

Insbesondere tritt letzteres Problem deswegen auf, da übereinander liegende Verkleidungselemente nicht direkt übereinander sondern in horizontaler Richtung versetzt zueinander an der Mauer angebracht werden, damit sich die Platte in vertikaler Richtung aneinander abstützen können.

Weiters zeigen die DE 296 12 755 U1 und die CH 647 290 A5 eingangs erwähnte Verkleidungselemente, mit welchen allerdings die geschilderten Probleme auch nicht zuverlässig gelöst werden können.

Es ist eine Aufgabe der Erfindung, eine in der Herstellung und Montage, insbesondere hinsichtlich der versetzten Montage, einfaches Verkleidungselement zu schaffen.

Diese Aufgabe wird mit einem eingangs erwähnten Verkleidungselement dadurch gelöst, dass erfindungsgemäß lediglich eine Hälfte der Begrenzungsfläche zumindest einen von oben nach unten verlaufenden Kanal aufweist, während in der anderen Hälfte der Begrenzungsfläche keine Kanäle vorgesehen sind.

Durch diese erfindungsgemäße Ausgestaltung ergibt sich der Effekt, dass der oder die Kanäle derart verlaufen, dass die Verkleidungselemente einfach versetzt oder um 180 Grad gedreht und versetzt übereinander angeordnet werden können und die Kanäle der Platten entsprechend ineinander übergehen.

Hinsichtlich einer einfachen Verlegung der Verkleidungselemente ist es günstig, wenn die obere und die untere Begrenzungsfläche parallel zueinander verlaufen, beispielsweise kann es sich bei dem Verkleidungselement um ein Parallelogramm, einen Rhombus, ein Trapez etc. handeln.

Von besonderem Vorteil ist es dabei, wenn die Form der Begrenzungsfläche derart ist, dass die Symmetriegerade normal auf die obere und die untere Begrenzungsfläche steht.

Grundsätzlich können mehrere Kanäle in der Begrenzungsfläche angeordnet sein, wobei die Anzahl aber möglichst gering gehalten werden sollte und die Breite der Kanäle ausreichend groß sein sollte. Von besonderem Vorteil ist die Erfindung aber dann, wenn genau ein von oben nach unten verlaufender Kanal vorgesehen ist.

Grundsätzlich wird angestrebt, eine möglichst große Fläche mit dem oder den Kanälen abzudecken; auf der anderen Seite muss aber noch genügend Fläche an der der Mauer zugewandten Begrenzungsfläche vorhanden sein, um die Verkleidungsplatte an der Mauer befestigen zu können. Bei mehreren Kanälen muss die Breite der Kanäle verringert werden, wodurch es unter Umständen wieder zu Problemen bei der Montage kommen kann, da genau gearbeitet werden muss, damit die Kanäle unterschiedlicher Verkleidungselemente ineinander übergehen. Bei Verwendung von lediglich einem einzigen Kanal kann dieser relativ breit ausgeführt werden, weswegen es dann auch bei der Montage nicht mehr notwendig ist, sehr genau zu arbeiten, da sich auf Grund der großen Breite des Kanals leicht ein Ineinandermünden der Kanäle benachbarter Verkleidungselemente realisieren lässt.

Besonders einfach herzustellen und zu montieren ist das Verkleidungselement, wenn es eine rechteckförmige oder quadratische, der Mauer zugewandte Begrenzungsfläche aufweist, mit einer Höhe h und einer Breite b, insbesondere, wenn das gesamte Verkleidungselement ein entsprechender Quader oder Würfel ist.

Einfach in der Montage ist ein erfindungsgemäßes Verkleidungselement, wenn der genau eine Kanal sowohl zu der Symmetriegeraden als auch zu der jene Hälfte, in welcher der Kanal verläuft, begrenzenden Seitenbegrenzungsfläche einen Abstand aufweist, und außerdem ist ein solches Verkleidungselement von der Struktur her relativ stabil und übereinander liegende Verkleidungselemente können relativ weit horizontal zueinander verschoben werden. Je näher der Kanal zu der Symmetriegerade liegt, umso weniger weit kann das Ausmaß der Verschiebung sein. Dadurch, dass der Kanal auch nicht ganz zum seitlichen Rand des Elementes reicht, ist dort ebenfalls Platz zum Befestigen des Verkleidungselementes vorhanden, wodurch eine stabilere Montage gegeben ist.

Beispielsweise sind die beiden Abstände identisch.

Um weiters einerseits genügend Raum zum Befestigen zu bieten und andererseits aber auch genügend Luft an der Mauer vorbeiführen zu können, insbesondere eine Große Fläche zu der Mauer hin für die vorbeiströmende Luft zu bieten, ist bei einer konkreten vorteilhaften Variante vorgesehen, dass ca. 40% der Begrenzungsfläche nicht von Kanälen belegt sind.

Wie z.B. aus der WO2008/128262A1 bekannt sind die Kanäle als Vertiefungen an der inneren Begrenzungsfläche des Verkleidungselementes angebracht.

Das Verkleidungselement kann als Dämmplatte oder als Abstandshalter für eine Dämmplatte ausgebildet sein.

Eine eingangs erwähnte erfindungsgemäße Mauerverkleidung zeichnet sich durch von oben nach unten verlaufenden Kanäle mit Verkleidungselementen wie oben beschrieben aus, wobei die Verkleidungselemente in übereinander liegenden Zeilen angeordnet sind und übereinander liegende Verkleidungselemente horizontal zueinander versetzt angeordnet sind.

Im Folgenden ist die Erfindung an Hand der Zeichnung näher erläutert. In dieser zeigt
Fig. 1 eine Ansicht eines Gebäudes mit daran angebrachter erfindungsgemäßer Mauerverkleidung,
Fig. 2 die Mauer des Gebäudes aus Figur 1 in einer "aufgerollten" Darstellung,
Fig. 3 eine Mauerverkleidung an einer Mauer in einem horizontalen Schnitt mit aus dem Stand der Technik bekannten Verkleidungselementen,
Fig. 4a eine erste Variante eines erfindungsgemäßen Verkleidungselementes,
Fig. 4b eine Mauerverkleidung aus Verkleidungselementen nach der ersten Variante,
Fig. 5a eine zweite Variante eines erfindungsgemäßen Verkleidungselementes,
Fig. 5b eine Mauerverkleidung aus Verkleidungselementen nach der zweiten Variante,
Fig. 6a das Verkleidungselement nach der ersten Variante in einer Detailansicht in Richtung auf die der Mauer zugewandte Begrenzungsfläche,
Fig. 6b das Verkleidungselement aus Figur 6a in einem horizontalen Schnitt, befestigt an einer Mauer, und
Figuren 7a - 8b weitere Verkleidungselemente mit zugehörigen Mauerverkleidungen aus solchen Verkleidungselementen.

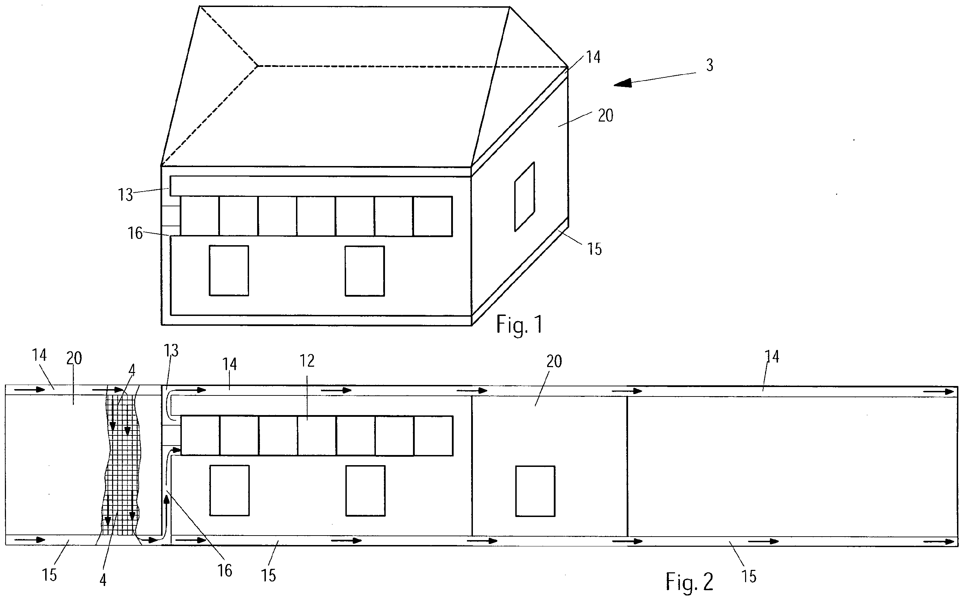

Figur 1 zeigt eine perspektivische Ansicht eines Gebäudes 3, Figur 2 zeigt die Seitenwände des Gebäudes 3 aus Figur 1 in einer "aufgerollten" Darstellung. An einer Wand, vorzugsweise einer nach Süden ausgerichteten Außenwand ist ein Sonnenkollektor 12 zum Wärmen eines Wärme- bzw. Kälte-Trägermediums vorgesehen, wobei im Folgenden davon ausgegangen wird, dass es sich bei dem Trägermedium um Luft handelt, welche sich als Träger für Wärme und Kälte gut eignet und in der Handhabung unproblematisch ist. Als Trägermedium wären prinzipiell aber auch andere gasförmige Medien oder Flüssigkeiten denkbar.

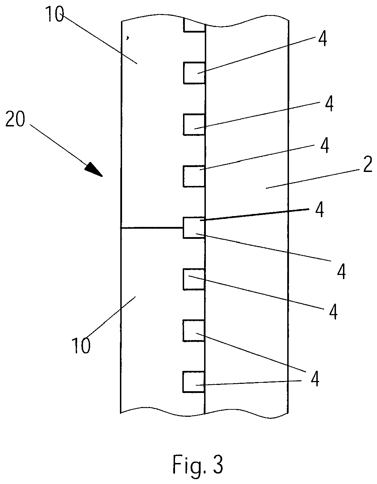

Wie in Figur 3 schematisch zu erkennen ist, besteht eine Wand aus einer (Außen)Mauer 2, welche mit einer Verkleidung 20 versehen ist. Die hier gezeigte Mauerverkleidung 20 aufgebaut aus aus dem Stand der Technik bekannten plattenförmigen Verkleidungselementen 10 aufgebaut, wobei in den Verkleidungselementen 10 von oben nach unten verlaufende Kanäle 4 zur Durchströmung von Luft vorgesehen sind. In dem gezeigten Beispiel handelt es sich bei den Verkleidungselementen um Wärmedämmplatten.

Über einen Einströmkanal 13 strömt die durch den Sonnenkollektor 12 gewärmte Luft in einen im Wesentlichen um das gesamte Gebäude 3 umlaufenden oberen Hauptkanal 14 ein, und die abgekühlte Luft strömt nach dem Durchströmen der Kanäle 4 in den Verkleidungselementen und der Wärmeabgabe an die Mauer 2 über einen unteren, im Wesentlichen um das gesamte Gebäude 3 umlaufenden Hauptkanal 15 und einen Ausströmkanal 16 in den Sonnenkollektor 12 zurück. Die Strömungsrichtung der Luft ist in Figur 2 und 3 mit Pfeilen angedeutet.

Durch die vorzugsweise südseitige Anbringung des Sonnenkollektors an dem Gebäude kann die Luft optimal erwärmt werden und die Wärme wird beim Umströmen des Gebäudes an die Mauer des Gebäudes abgegeben.

Die Luft kann in den Kanälen ohne äußeren Zwang lediglich durch temperaturbedingte Dichteunterschiede und Schwerkraft zirkulieren. Um allerdings ein rascheres Umströmen und eine gleichmäßigere Wärmeabgabe zu ermöglichen, kann weiters vorgesehen sein, dass das Trägermedium in den Kanälen mittels Zwangsführung, beispielsweise mittels eines oder mehrerer, in der Zeichnung nicht dargestellter Ventilatoren, bewegt wird. Auf diese Weise kann Wärme zuverlässig auch an die Nordseite des Gebäudes transportiert werden.

Das Mauerwerk dient somit als Wärmespeicher und als Heizfläche für das Haus.

Die Luftführung und dementsprechend die Anordnungen der Kanäle sollte, um eine gleichmäßige Durchströmung und Wärmeabgabe zu erreichen, nach dem Prinzip von Tichelmann erfolgen.

An Stelle von Verkleidungselementen wie aus dem Stand der Technik bekannt ist es zur Durchströmung der Luft von oben nach unten von Vorteil, Verkleidungselemente nach der Erfindung zu verwenden, welche im Folgenden an Hand von Beispielen näher beschrieben sind.

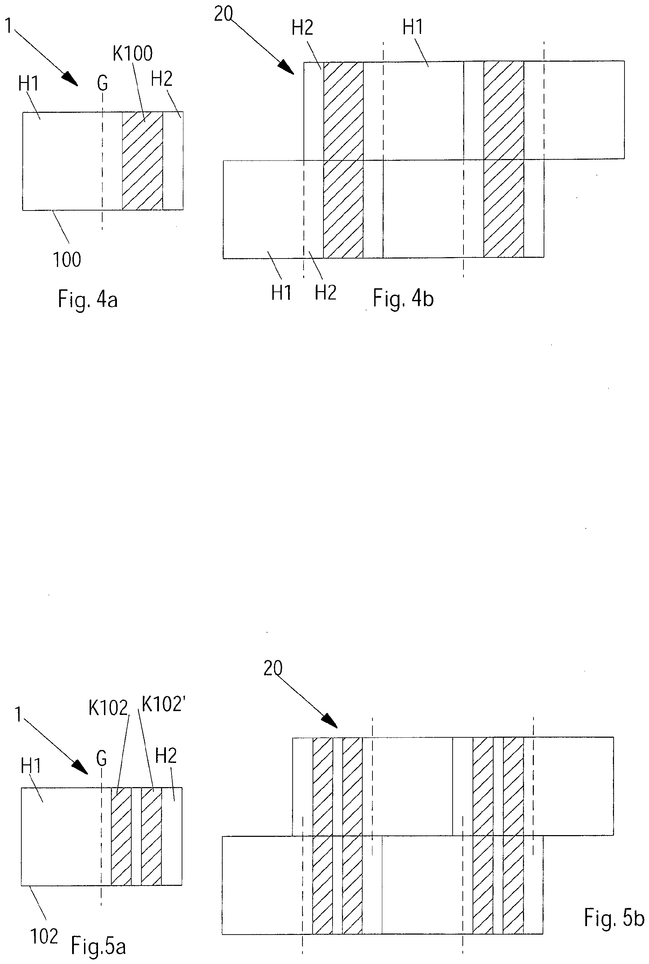

Figur 4a zeigt eine erste Variante eines plattenförmigen Verkleidungselementes 1 für eine Mauer 2 eines Gebäudes 3, wobei in dem Verkleidungselement 1 genau einen - in an der Mauer montiertem Zustand des Verkleidungselementes - von oben nach unten verlaufenden Kanal K100 zur Durchströmung eines Wärme- und/oder Kälte-Trägermedium aufweist. Der Kanal K100 ist an der der Mauer 2 zugewandten Begrenzungsfläche 100, 101, 102 nach Außen hin, der Mauer 2 zugewandt offen ausgebildet.

Das Verkleidungselement 1 wird von einer Symmetriegeraden G (gedanklich) von oben nach unten in zwei Hälften H1, H2 halbiert. Der eine Kanal K100 liegt vollständig in der zweiten Hälfte H2 und verläuft parallel zu der Geraden G.

Wird aus solchen Verkleidungselementen 1 eine Mauerverkleidung 20 im Verbund, d.h. mit versetzten Elementen 1 gebildet, wie dies in Figur 4b gezeigt ist, so ist es nur notwendig, die Platten einer Reihe jeweils um 180° zu drehen, sodass die Kanale K100 zweier übereinander liegender Elemente 1 wieder ineinander übergehen.

Wenn die Kanäle K100 ausreichend breit sind, ist es auch nicht notwendig, die Elemente 1 besonders exakt im Verbund zu legen, da sich relativ einfach eine "Überlappung" übereinander liegender Kanäle ergibt.

Figur 5a zeigt ein zweites Beispiel, bei dem an der Begrenzungsfläche 1 zwei Kanäle K102, K102' wieder mit dem größeren Teil ihrer Fläche, in dem vorliegenden Fall sogar vollständig, in einer Hälfte H2 liegen. Die Verwendung von zwei Kanälen ist möglich, allerdings kann es hier schon schwieriger werden, ein ineinander münden von Kanälen zu erreichen, weswegen die Elemente dann im Verbund schon genauer verlegt werden, was nachteilig ist.

Durch diese erfindungsgemäße Ausgestaltung ergibt sich der Effekt, dass der oder die Kanäle derart verlaufen, dass die Verkleidungselemente einfach versetzt oder um 180 Grad gedreht und versetzt übereinander angeordnet werden könne und die Kanäle der Verkleidungselemente entsprechend ineinander übergehen.

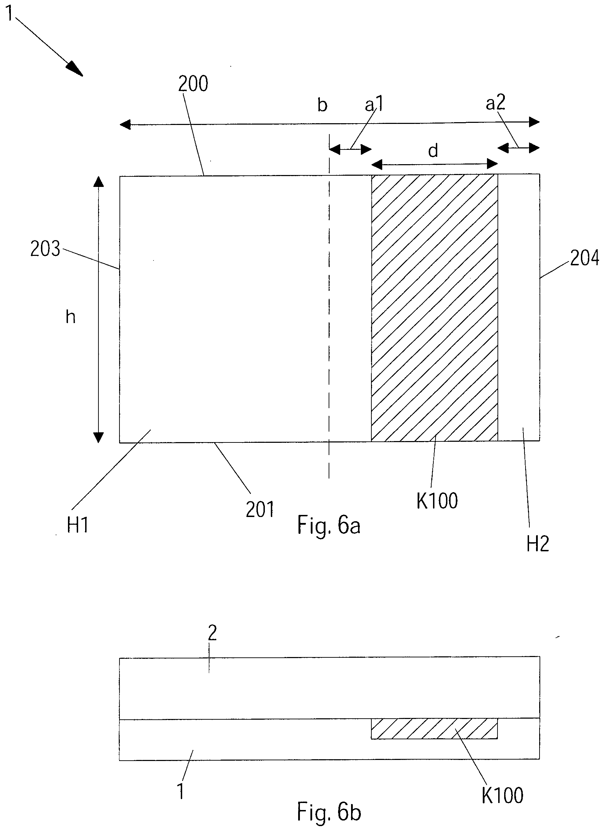

Figur 6a zeigt noch einmal das besonders vorteilhafte Verkleidungselement aus 4a in einer vergrößerten Darstellung mit Blick auf die der Mauer zugewandte Begrenzungsfläche, Figur 6b zeigt dasselbe Element 1 in einem horizontalen Schnitt in an der Mauer 2 montierten Zustand.

Das Element 1 ist ein Quader mit einer rechteckförmigen Begrenzungsfläche 1, mit parallelen oberen und unteren Begrenzungsflächen 200, 201 sowie parallelen seitlichen Begrenzungsflächen 203, 204.

Die der Mauer zugewandte Begrenzungsfläche 100 weist eine Höhe h und eine Breite b auf. Beispielsweise ist h = 50cm und b = 100cm.

Der Kanal K100 weist eine Breite d auf und verläuft in einem Abstand a1 zu der Geraden G und einem Abstand a2 zu der seitlichen Begrenzungsfläche 204. Ein solches Verkleidungselement ist von der Struktur her relativ stabil und übereinander liegende Verkleidungselemente können relativ weit horizontal zueinander verschoben werden. Je näher der Kanal zu der Symmetriegerade G liegt, umso weniger weit kann das Ausmaß der Verschiebung sein. Dadurch, dass der Kanal auch nicht ganz zum seitlichen Rand 204 des Elementes reicht, ist dort ebenfalls Platz zum Befestigen des Verkleidungselementes vorhanden, wodurch eine stabilere Montage gegeben ist.

In dem gezeigten Beispiel sind die beiden Abstände a1, a2 identisch.

Ein solches Element 1 wie aus Figur 6a, 6b (oder auch andere Elemente nach der Erfindung) können im vollen Bereich (ohne Kanäle) auch problemlos abgeschnitten werden und man erhält wiederum ein vollständiges Verkleidungselement, welches weiter verwendet werden kann.

Um weiters einerseits genügend Raum zum Befestigen zu bieten und andererseits aber auch genügend Luft an der Mauer vorbeiführen zu können, insbesondere eine große Fläche zu der Mauer hin für die vorbeiströmende Luft zu bieten, ist bei einer konkreten vorteilhaften Variante vorgesehen, dass ca. 40% der Begrenzungsfläche nicht von Kanälen belegt sind, um ausreichend Platz zum Befestigen des Verkleidungselementes an der Mauer zu haben.

Insbesondere bei nur einem Kanal in einer Hälfte kann das Element auch einfacher an einer Mauer befestigt werden, da im freien Bereich leicht gedübelt werden kann und es muss auch nicht so exakt geklebt werden wie bei mehreren Kanälen, wo auch die Gefahr des Verklebens der Kanäle größer ist, außerdem ist bei nur einem Kanal die Herstellung der Elemente wesentlich einfacher.

Die Kanäle sind als Vertiefungen an der inneren Begrenzungsfläche des Verkleidungselementes angebracht. Die erfindungsgemäßen Verkleidungselemente können als Dämmplatte oder als Abstandshalter für eine Dämmplatte ausgebildet sein.

In der Praxis sind üblicherweise die Kanäle auch nicht exakt eckig wie dargestellt ausgebildet sondern die Ecken abgerundet.

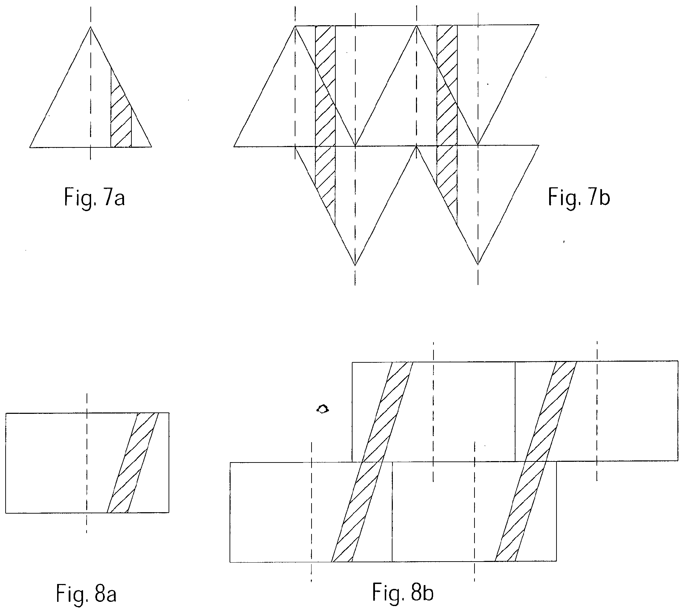

Figuren 7a und 8a und die zugehörigen Figuren 7b - 8b zeigen schließlich noch weitere mögliche Variante der Erfindung, die aber nicht abschließend sind, mit welchen der erfindungsgemäße Grundgedanke ebenfalls realisierbar, aber in der Praxis weniger relevant da relativ kompliziert sind.

## Patentansprüche

1. Plattenförmiges Verkleidungselement (1) für eine Mauer (2) eines Gebäudes (3), wobei in dem Verkleidungselement (1) ein oder mehrere - in einem an der Mauer montierten Zustand des Verkleidungselementes - von oben nach unten verlaufende Kanäle (K100, K102, K102') zur Durchströmung eines Wärme- und/oder Kälte-Trägermedium, vorzugsweise für Luft, vorgesehen sind, wobei der zumindest eine Kanal (K100, K102, K102') - in einem an der Mauer montierten Zustand des Verkleidungselementes -
an einer Begrenzungsfläche (100, 102), welche der Mauer (2) zugewandt ist, nach Außen hin, der Mauer (2) zugewandt offen, ausgebildet ist, wobei
der eine oder die mehreren Kanäle (K100, K102, K102') derart in Bezug auf eine von oben nach unten verlaufende Symmetriegerade (G), welche Symmetriegerade (G) die der Mauer (2) zugewandte Begrenzungsfläche (100, 102) halbiert, angeordnet ist/sind, dass in einer Hälfte (H2) der Begrenzungsfläche (100, 102) eine größere Fläche von dem zumindest einen Kanal (K100, K102, K102') eingenommen ist als in der anderen Hälfte (H1), **dadurch gekennzeichnet, dass**
lediglich eine Hälfte (H2) der Begrenzungsfläche (100, 102) zumindest einen von oben nach unten verlaufenden Kanal (K100, K102, K102') aufweist, während in der anderen Hälfte der Begrenzungsfläche keine Kanäle vorgesehen sind.

2. Verkleidungselement nach Anspruch 1, **dadurch gekennzeichnet, dass** die obere und die untere Begrenzungsfläche (200, 201) parallel zueinander verlaufen.

3. Verkleidungselement nach Anspruch 2, **dadurch gekennzeichnet, dass** die Symmetriegerade (G) normal auf die obere und die untere Begrenzungsfläche (200, 201) steht.

4. Verkleidungselement nach einem der Ansprüche 1 bis 3, **dadurch gekennzeichnet, dass** genau ein von oben nach unten verlaufender Kanal (K100) vorgesehen ist.

5. Verkleidungselement nach einem der Ansprüche 1 bis 4, **dadurch gekennzeichnet, dass** es eine rechtförmige oder quadratische, der Mauer zugewandte Begrenzungsfläche (100, 102) aufweist, mit einer Höhe h und einer Breite b.

6. Verkleidungselement nach Anspruch 4 oder 5, **dadurch gekennzeichnet, dass** der genau eine Kanal (K100) sowohl zu der Symmetriegeraden (G) als auch zu der die Hälfte (H2), in welcher der Kanal (K100) verläuft, begrenzenden Seitenbegrenzungsfläche (203) einen Abstand (a1, a2) aufweist.

7. Verkleidungselement nach Anspruch 6, **dadurch gekennzeichnet, dass** die beiden Abstände (a1, a2) identisch sind.

8. Verkleidungselement nach einem der Ansprüche 1 bis 7, **dadurch gekennzeichnet, dass** ca. 40% der Begrenzungsfläche (100, 102) nicht von einem oder mehreren Kanälen (K100, K102, K102') belegt sind.

9. Verkleidungselement nach einem der Ansprüche 1 bis 8, **dadurch gekennzeichnet, dass** der zumindest eine Kanal (K100, K102, K102') als Vertiefung an der inneren Begrenzungsfläche (11) des Verkleidungselementes (1) angebracht ist.

10. Verkleidungselement nach einem der Ansprüche 1 bis 9, **dadurch gekennzeichnet, dass** es als Dämmplatte ausgebildet ist.

11. Verkleidungselement nach einem der Ansprüche 1 bis 10, **dadurch gekennzeichnet, dass** es als Abstandshalter für eine Dämmplatte ausgebildet ist.

12. Mauerverkleidung für eine Außenmauer (2) eines Gebäudes (3), bestehend aus einem oberen, das Gebäude (3) zumindest teilweise umlaufenden Hauptkanal (14) sowie einem unteren, das Gebäude (3) ebenfalls teilweise umlaufenden Hauptkanal (15), und wobei die beiden Hauptkanäle (14, 15) mittels in Verkleidungsplatten angeordneten, von oben nach unten verlaufenden Kanälen verbunden sind, **dadurch gekennzeichnet, dass** die von oben nach unten verlaufenden Kanäle mit Verkleidungselementen (1) nach einem der Ansprüche 1 bis 11 ausgebildet sind, welche Verkleidungselemente (1) in übereinander liegenden Zeilen angeordnet sind, und wobei übereinander liegende Verkleidungselemente (1) horizontal zueinander versetzt angeordnet sind.

## Claims

1. A planar cladding element (1) for a wall (2) of a building (3), wherein one or more channels (K100, K102, K102') running from top to bottom - when the cladding element is mounted on the wall - for allowing a heat carrier medium or coolant to be passed through, preferably for air, is/are provided in the cladding element (1), wherein the at least one channel (K100, K102, K102') - when the cladding element is mounted on the wall -
is outwardly open towards the wall (2) at a delimiting face (100, 102) facing the wall (2), wherein
the one or more channels (K100, K102, K102') in relation to a line of symmetry (G) running from top to bottom, which line of symmetry (G) halves the delimiting face (100, 102) facing the wall (2), is/are arranged in such a way that a greater area of the at least one channel (K100, K102, K102') is included in one half (H2) of the delimiting face (100, 102) than in the other half (H1), **characterised in that**
only one half (H2) of the delimiting face (100, 102) has at least one channel (K100, K102, K102') running from top to bottom, whereas no channels are provided in the other half of the delimiting face.

2. The cladding element according to claim 1, **characterised in that** the upper and the lower delimiting face (200, 201) run parallel to one another.

3. The cladding element according to claim 2, **characterised in that** the line of symmetry (G) is normal to the upper and the lower delimiting face (200, 201).

4. The cladding element according to any one of claims 1 to 3, **characterised in that** exactly one channel (K100) running from top to bottom is provided.

5. The cladding element according to any one of claims 1 to 4, **characterised in that** it has a rectangular or square delimiting face (100, 102) facing the wall, with a height h and a width b.

6. The cladding element according to claim 4 or 5, **characterised in that** the exactly one channel (K100) has a distance (a1, a2) both from the line of symmetry (G) and from the side delimiting face (203) delimiting the half (H2) in which the channel (K100) runs.

7. The cladding element according to claim 6, **characterised in that** the two distances (a1, a2) are identical.

8. The cladding element according to any one of claims 1 to 7, **characterised in that** approximately 40% of the delimiting face (100, 102) is unoccupied by one or more channels (K100, K102, K102').

9. The cladding element according to any one of claims 1 to 8, **characterised in that** the at least one channel (K100, K102, K102') is formed as a recess on the inner delimiting face (11) of the cladding element (1).

10. The cladding element according to any one of claims 1 to 9, **characterised in that** it is formed as an insulation board.

11. The cladding element according to any one of claims 1 to 10, **characterised in that** it is formed as a spacer for an insulation board.

12. A wall cladding for an external wall (2) of a building (3), consisting of an upper main channel (14) surrounding the building (3) at least in part and also a lower main channel (15) surrounding the building (3) likewise in part, and wherein the two main channels (14, 15) are connected by means of channels which are arranged in cladding boards and which run from top to bottom, **characterised in that** the channels running from top to bottom are formed with cladding elements (1) according to any one of claims 1 to 11, which cladding elements (1) are arranged in rows above one another, and wherein cladding elements (1) disposed above one another are horizontally offset in relation to one another.

## Revendications

1. Elément de revêtement (1) en forme de plaque pour un mur (2) d'un bâtiment (3), où un ou plusieurs canaux (K100, K102, K102) s'étendant du haut vers le bas, dans un état monté du mur, sont prévus dans l'élément de revêtement pour le passage d'un milieu caloporteur et/ou de refroidissement, de préférence pour de l'air, où l'au moins un canal (K100, K102, K102'), dans un état monté de l'élément de revêtement, est formé sur une surface de délimitation (100, 102) qui est orientée vers le mur (2), vers l'extérieur, ouverte face au mur (2), où
le canal ou les canaux (K100, K102, K102') est/sont disposé/s de telle manière par rapport à une ligne droite de symétrie (G) s'étendant du haut vers le bas, laquelle ligne droite de symétrie (G) divise en deux la surface de délimitation (100, 102) orientée vers le mur (2), de sorte que, dans une moitié (H2) de la surface de délimitation (100, 102), une surface de l'au moins un canal (K100, K102, K102') plus grande que dans l'autre moitié (H1) est comprise, **caractérisé en ce que** simplement une moitié (H2) de la surface de délimitation (100, 102) présente au moins un canal (K100, K102, K102') s'étendant du haut vers le bas, tandis que, dans l'autre moitié de la surface de délimitation, aucun canal n'est prévu.

2. Elément de revêtement selon la revendication 1, **caractérisé en ce que** les surfaces de délimitation supérieure et inférieure (200, 201) s'étendent parallèles l'une à l'autre.

3. Elément de revêtement selon la revendication 2, **caractérisé en ce que** la ligne droite de symétrie (G) est normale par rapport aux surfaces de délimitation supérieure et inférieure (200, 201).

4. Elément de revêtement selon l'une des revendications 1 à 3, **caractérisé en ce que** précisément un seul canal (K100) s'étendant du haut vers le bas est prévu.

5. Elément de revêtement selon l'une des revendications 1 à 4, **caractérisé en ce qu'**il présente une surface de délimitation (100, 102) orientée vers le mur rectangulaire ou carrée avec une hauteur h et une largeur b.

6. Elément de revêtement selon la revendication 4 ou 5, **caractérisé en ce que** précisément le canal (K100), ainsi la surface de délimitation latérale (203) adjacente, présentent une distance (a1, a2) à la fois par rapport aux droites de symétrie (G) et également par rapport à la moitié (H2) dans laquelle s'étend le canal (K100).

7. Elément de revêtement selon la revendication 6, **caractérisé en ce que** les deux distances (a1, a2) sont identiques.

8. Elément de revêtement selon l'une des revendications 1 à 7, **caractérisé en ce qu**'environ 40 % de la surface de délimitation (100, 102) ne sont pas pourvus d'un ou de plusieurs canaux (K100, K102, K102').

9. Elément de revêtement selon l'une des revendications 1 à 8, **caractérisé en ce que** l'au moins un canal (K100, K102, K102') est rapporté sous la forme d'un creux sur la surface de délimitation (11) intérieure de l'élément de revêtement (1).

10. Elément de revêtement selon l'une des revendications 1 à 9, **caractérisé en ce qu**'il est conçu sous la forme d'une plaque d'amortissement.

11. Elément de revêtement selon l'une des revendications 1 à 10, **caractérisé en ce qu**'il est conçu sous la forme d'une entretoise pour une plaque d'amortissement.

12. Revêtement mural pour un mur extérieur (2) d'un bâtiment (3), constitué d'un canal principal supérieur (14) entourant au moins partiellement le bâtiment (3), ainsi que d'un canal principal inférieur (15) entourant également partiellement le bâtiment (3), et où les deux canaux principaux (14, 15) sont reliés au moyen de canaux s'étendant du haut vers le bas disposés dans des plaques de revêtement, **caractérisé en ce que** le canaux s'étendant du haut vers le bas sont formés avec des éléments de revêtement (1) selon l'une des revendications 1 à 11, lesquels éléments de revêtement (1) sont disposés en lignes se situant les unes sur les autres, et où des éléments de revêtement (1) se situant les uns sur les autres sont disposés horizontalement, décalés les uns par rapport aux autres.
